# EUROPÄISCHE PATENTSCHRIFT

(11) **EP 3 015 786 B1**
(45) Veröffentlichungstag und Bekanntmachung des Hinweises auf die Patenterteilung: **14.03.2018**
(21) Anmeldenummer: 15191590.7
(22) Anmeldetag: 27.10.2015
(51) Int. Cl.: F24H 1/18, F24H 7/02, F24H 7/04, F24H 8/00, F24D 3/08, F28D 20/00, F28D 20/02

(54) **HEIZGERÄT UND VERFAHREN ZUM BETREIBEN EINES HEIZGERÄTS**
HEATING DEVICE AND METHOD FOR OPERATING SAME
APPAREIL DE CHAUFFAGE ET PROCEDE DE FONCTIONNEMENT D'UN APPAREIL DE CHAUFFAGE

(30) Priorität: 28.10.2014 DE 102014221882
(43) Veröffentlichungstag der Anmeldung: 04.05.2016
(73) Patentinhaber: Vaillant GmbH, 42859 Remscheid (DE)
(72) Erfinder: Pecka, Kai, 42855 Remscheid (DE); Wegner, Alexander, 45881 Gelsenkirchen (DE)
(74) Vertreter: Hocker, Thomas

(56) Entgegenhaltungen:
- EP-A1- 1 026 449
- EP-A1- 1 450 115
- DE-A1- 4 117 516
- DE-A1- 4 332 141
- DE-A1-102009 030 638
- DE-A1-102010 011 573
- DE-U1-202007 017 038
- GB-A- 2 262 593
- JP-A- S60 191 136

## Beschreibung

Die Erfindung betrifft ein Heizgerät mit einem Brenner, einem Primärwärmetauscher zum Übertragen der Wärme vom Brenner auf ein Wärmeträgermedium zum Erwärmen von Warmwasser oder zum Beheizen einer Wärmesenke, und einem PCM-Speicher sowie ein Verfahren zum Betreiben eines Heizgeräts.

Gattungsgemäße Heizgeräte schalten über ein Drei-Wege-Ventil oder über eine alternative Ventilanordnung die hydraulische Verbindung zur Förderung des Wärmeträgermediums so, dass entweder ein Heizkreis, welcher mit einer Wärmesenke verbunden ist, beheizt wird oder aber über einen Sekundärwärmetauscher ein Warmwasserspeicher beheizt wird. Ein solches Heizgerät ist z.B. bekannt aus dem Gebrauchsmuster DE 94 09 782 U1. Mit zunehmend verbesserter Wärmedämmung der zu beheizenden Gebäude ergibt sich nun das Problem, dass zum reinen Beheizen des Gebäudes eine geringe Leistung des Brenners ausreichend wäre. Jedoch würde diese geringe Leistung nicht ausreichen, um den Wärmebedarf für Warmwasser zu decken. Um diesem Missverhältnis Rechnung zu tragen, muss ein Warmwasserspeicher mit hohem Speichervolumen eingesetzt werden wobei dieser einschließlich der erforderlichen Wärmedämmung viel Platz einnimmt.

Aus der Patentanmeldung EP 2 458 299 A2 ist ein Heizgerät bekannt, bei dem der Brenner und ein erster Wärmetauscher von einem Speicher ummantelt ist, welcher mit Wasser und einem Phasenwechselmaterial (PCM) befüllt ist. Innerhalb des Speichers ist ein zweiter Wärmetauscher vorgesehen. Es wird vorgeschlagen, kaltes Wasser zunächst in dem zweiten Wärmetauscher vorzuwärmen und in dem ersten Wärmetauscher auf die Endtemperatur zu erwärmen. Ein gezieltes Beheizen des Speichers ist jedoch nicht vorgesehen. Zudem wird keine Verbindung zu einem Heizkreislauf beschrieben.

Die Patentanmeldung DE 43 32 141 A1 offenbart ein Heizgerät, bei dem im gemeinsamen Rücklauf von Brauch- und Heizwasser ein Latentwärmespeicher vorgesehen ist, um auch mit relativ kleinen Brennerleistungen ausreichend Brauchwasser bereitstellen zu können.

Die Patentanmeldung DE 41 17 516 A1 schlägt vor, in einem Latentwärmespeicher Wärme zu speichern, um bei der Entnahme von warmem Brauchwasser lange Vorlaufzeiten zu vermeiden, bis sich die gewünschte Temperatur an der Entnahmestelle eingestellt hat.

Die Patentanmeldung DE 10 2010 011573 A1 offenbart ebenfalls ein Heizgerät, bei dem im gemeinsamen Rücklauf von Brauch- und Heizwasser ein Latentwärmespeicher vorgesehen ist.

Bei der Patentanmeldung JP S 60-191 136 A1 kann ein Latentwärmespeicher von einer Wärmequelle aufgeladen werden, um dann bei Bedarf anstelle der Wärmequelle einem Heizkreis zu versorgen.

Die Gebrauchsmustersschrift DE 20 2007 017038 U1 beschreibt die hydraulische Anordnung eines mobilen Heizgeräts.

Die Patentanmeldung DE 10 2009 030638 A1 beschreibt eine solarthermische Anlage.

Es ist Aufgabe der Erfindung, ein gattungsgemäßes Heizgerät mit einem kleineren Warmwasserspeicher bei gleichzeitig ausreichender Wärmeleistung zur Erwärmung des Warmwassers bereitzustellen.

Diese Aufgabe wird durch ein Heizgerät gemäß dem unabhängigen Vorrichtungsanspruch sowie ein Verfahren zum Betreiben des erfindungsgemäßen Heizgeräts gemäß dem unabhängigen Verfahrensanspruch gelöst.

Erfindungsgemäß ist im Rücklauf des Sekundärwärmetauschers zum Beheizen des Warmwasserspeichers, aus dem abgekühltes Wärmeträgermedium strömt um durch den Primärwärmetauscher erwärmt zu werden, vor dem Primärwärmetauscher ein PCM-Speicher vorgesehen. PCM-Speicher können aufgrund des Phasenwechselmaterials bei kompakter Bauweise große Wärmemengen speichern. Dabei ist der PCM-Speicher so konfiguriert, dass das Wärmeträgermedium aus dem Rücklauf des Warmwasserspeichers moderat erwärmt wird. Beispielsweise kann ein Phasenwechselmaterial eingesetzt werden, das einen Schmelzpunkt bei etwa 56 °C aufweist. Anschließend strömt das zu erwärmende Wärmeträgermedium durch den Primärwärmetauscher, wo es auf die benötigte Endtemperatur erwärmt wird. Da das Wärmeträgermedium vor Eintritt in den Primärwärmetauscher bereits vorgewärmt ist, ist eine geringere Leistung des Primärwärmetauschers und des Brenners erforderlich. Dadurch können die Leistungen zum Beheizen eines Gebäudes und zum Erwärmen des Warmwasserspeichers aufeinander angepasst werden.

Die Wärme muss jedoch zunächst in den PCM-Speicher eingebracht werden. Dazu ist es erfindungsgemäß vorgesehen, den PCM-Speicher gleichzeitig mit dem Heizkreis zu beheizen. Hierzu ist es erfindungsgemäß vorgesehen, den PCM-Speicher hydraulisch parallel zum Heizkreis zu betreiben.

In einer vorteilhaften Ausführungsvariante ist im Falle eines Brennwertheizgeräts zwischen dem Sekundärwärmetauscher und dem PCM-Speicher ein Kondensationswärmetauscher vorgesehen. Dadurch kann dem Abgas des Brenners zusätzlich Wärme entnommen werden. Diese Ausführungsvariante macht sich die Tatsache zu Nutze, dass das Temperaturniveau des Wärmeträgermediums unmittelbar nach dem Sekundärwärmetauscher geringer ist als hinter dem PCM-Speicher.

In vorteilhafter Weise umfasst das Hydrauliksystem einem Bypass für den PCM-Speicher. Dadurch ist es möglich, den Energiefluss innerhalb des Heizgeräts bedarfsgerecht zu steuern, beispielsweise wenn ein sehr hoher Wärmebedarf für den Heizkreis gefordert ist, wenn die Temperatur des Wärmeträgermediums beim Verlassen des Sekundärwärmetauschers höher ist als die des PCM-Speichers oder wenn die Temperatur des PCM-Speichers beim Aufheizen des PCM-Speichers höher ist als das dafür zur Verfügung stehende Wärmeträgermedium.

In einer Weiterbildung der Erfindung umfasst das Heizgerät zusätzlich einen Solarwärmetauscher zum Übertragen von solarer Wärme auf das Wärmeträgermedium. Bevorzugt ist der Solarwärmetauscher stromauf des Primärwärmetauschers vorgesehen. Je nach Temperaturniveau kann der Solarwärmetauscher stromauf oder stromab des PCM-Speichers angeordnet sein.

Die Erfindung wird nun anhand der Figuren detailliert erläutert. Es stellen dar:
Figur 1: Das Schema eines erfindungsgemäßen Heizgeräts,
Figur 2: das Schema einer nicht erfindungsgemässen alternativen Ausführungsform eines Heizgeräts.

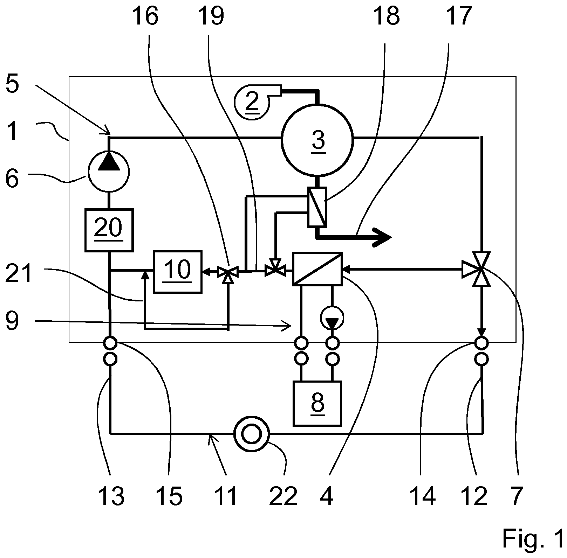

Figur 1 zeigt das Schema eines erfindungsgemäßen Heizgeräts. Das Heizgerät 1 umfasst eine Wärmequelle 2 zum erzeugen von Wärme, beispielsweise aus einem fossilen Wärmeträger wie Erdgas oder Erdöl. In diesem Fall ist die Wärmequelle 2 einen Brenner. Erfindungsgemäß sind auch andere Wärmequellen denkbar, wie die Abwärme eines Motors oder einer Brennstoffzelle in einem Kraft-Wärme-Kopplungssystem oder eine Wärmepumpe. Die Wärme der Wärmequelle 2 wird über einen Primärwärmetauscher 3 auf ein in einem Hydrauliksystem 5 zirkulierendes Wärmeträgermedium übertragen. Das Hydrauliksystem 5 umfasst zumindest eine Pumpe 6 sowie zumindest ein Ventil 7 sowie Rohrleitungen, die die einzelnen Aggregate miteinander verbinden. Das im Primärwärmetauscher 3 erwärmte Wärmeträgermedium kann entweder einen Heizkreis 11 mit Wärme versorgen um beispielsweise ein Gebäude zu beheizen oder einen Warmwasserspeicher 8 mit Wärme versorgen. Der Heizkreis 11 ist mit dem Heizgerät 1 verbindbar. Hierzu wird der Vorlauf 12 mit dem Anschluss für den Vorlauf 14 sowie der Rücklauf 13 mit dem Anschluss für den Rücklauf 15 verbunden der Heizkreis 11 umfasst eine Wärmesenke 22. Dies können beispielsweise Radiatoren, Fußbodenheizungen etc. sein. Der Warmwasserspeicher 8 ist ebenfalls mit dem Heizgerät 1 verbindbar oder kann mit dem Heizgerät 1 eine bauliche Einheit bilden.

Über das Ventil 7, in der Regel ein 3-Wege-Ventil, kann das Wärmeträgermedium entweder über den Heizkreis geleitet werden oder über den Sekundärwärmetauscher 4 geleitet werden. Mittels eines Warmwasser-Hydrauliksystems 9 wird die Wärme vom Sekundärwärmetauscher 4 auf den Warmwasserspeicher 8 übertragen. Das Warmwasser-Hydrauliksystem 9 umfasst eine Pumpe, mittels derer das Warmwasser-Hydraulik System 9 steuerbar ist. Es ist ebenfalls denkbar auf den Warmwasserspeicher 8 zu verzichten und das Warmwasser nach dem Durchlaufprinzip zu erzeugen. Stromab des Sekundärwärmetauschers 4 ist optional in einer Weiterbildung der Erfindung ein Kondensationswärmetauscher 18 vorgesehen, der mittels eines Bypasses 19 für den Kondensationswärmetauscher umgangen werden kann. Diese Kondensationswärmetauscher 18 kann im Abgasweg 17 eines Brenners 2 oder einer Brennkraftmaschine vorgesehen sein, um zusätzlich Kondensationswärme des Abgases zu sammeln. Erfindungsgemäß kann das Heizgerät ohne den Kondensationswärmetauscher 18 betrieben werden, außerdem kann der Kondensationswärmetauscher eine bauliche Einheit mit dem Primärwärmetauscher 3 bilden. Stromab des Sekundärwärmetauschers ist ein PCM-Speicher 10 vorgesehen, der über einen Bypass 21 umgangen werden kann. Mit dem Heizkreisventil 16 kann der PCM-Speicher in Reihe zu dem Heizkreis geschaltet werden. Der PCM-Speicher dient dazu, beim Aufheizen des Warmwasserspeichers 8 oder bei der Erzeugung von Warmwasser nach dem Durchlaufprinzip das abgekühlte Wärmeträgermedium vorzuheizen. Beispielsweise kann als Phasenwechselmaterial des PCM-Speichers ein Material mit einem Schmelzpunkt von 56 °C verwendet werden. Dadurch muss anschließend von der Wärmequelle 2 weniger Leistung aufgewendet werden, um das Wärmeträgermedium auf das für die Beheizung des Warmwasserspeichers 8 erforderliche Temperaturniveau aufzuheizenden. Das Heizkreisventil 16 kann auch als Proportionalventil ausgeführt werden. Hierdurch ist es möglich die Leistung des PCM speicher beim Entladen zu regeln. Wenn beispielsweise ein PCM-Speicher mit 56°C Schmelztemperatur des PCM entlanden wird um eine Fußbodenheizung mit einer Sollvorlauftemperatur von 35°C zu versorgen, so kann das Proprtionalventil entsprechend angesteuert werden, so dass sich eine Mischtemperatur von 35°C hinter dem Bypass ergibt. Ein in einer Weiterbildung der Erfindung optional zusätzlich stromauf des Primärwärmetauschers vorgesehener Solarwärmetauscher 20 kann das Wärmeträgermedium zusätzlich mit solarer Wärme beheizen.

Um Wärmeenergie im PCM-Speicher 10 zu speichern, wird erfindungsgemäß in der in Figur 1 dargestellten Ausführungsvariante das 3-Wege-Ventil 7 so geschaltet, dass ein Teilstrom des Wärmeträgermediums den Heizkreis 11 erwärmt und ein Teilstrom den PCM-Speicher 10 erwärmt. Dazu wird die Pumpe des Warmwasser-Hydrauliksystems 9 stillgesetzt, so dass dem Wärmeträgermedium im Sekundärwärmetauscher 4 keine Wärme entzogen wird. Alternativ kann das 3-Wege-Ventil so geschaltet werden, dass das durch den Primärwärmetauscher 3 erwärmte Wärmeträgermedium ausschließlich den PCM-Speicher 10 erwärmt oder ausschließlich den Heizkreis 11 erwärmt. Dies kann beispielsweise erforderlich sein, wenn ein hoher Wärmebedarf für den Heizkreis 11 besteht oder der PCM-Speicher 10 aufgeladen werden muss, ohne dass ein Wärmebedarf für den Heizkreis 11 besteht.

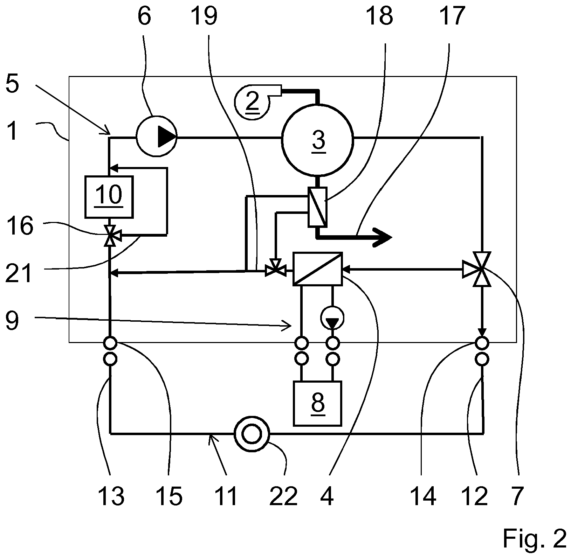

In Figur 2 ist abweichend von Figur 1 in einer alternativen Ausführungsform des Heizgeräts 1 der PCM-Speicher 10 mit dem Bypass 21 im gemeinsamen Rücklauf vom Sekundärwärmetauscher 4 und dem Heizkreis 11 angeordnet. Die Funktion zum erwärmen des Warmwasserspeichers 8 ist identisch mit der zu Figur 1 beschriebenen Funktionen. Das Aufheizen des PCM-Speichers 10 erfolgt durch das über den Anschluss für den Rücklauf 15 des Heizkreises 11 zugeleitete Wärmeträgermedium. Somit sind der Heizkreis 11 und der PCM-Speicher 10 hydraulisch in Reihe geschaltet. Auch in dieser Ausführungsvariante kann über einen Bypass 21 der PCM-Speicher umgangen werden. Ebenfalls ist es möglich, mittels Betätigen des Ventils 7 und Stillsitzen der Pumpe des Warmwasser-Hydrauliksystems 9 das Wärmeträgermedium ausschließlich zur Erwärmung des PCM-Speichers 10 einzusetzen.

In einer hier nicht dargestellten nicht erfindungsgemässen Ausführungsvariante kann das Hydrauliksystem 5 auch so ausgestaltet werden, dass der PCM-Speicher 10 stromauf des Heizkreises 11 angeordnet ist. Diese Ausführungsvariante ist vorteilhaft, wenn beispielsweise als Wärmesenke 22 eine Fußbodenheizung mit sehr niedrigen Rücklauftemperaturen eingesetzt wird.

### Bezugszeichenliste

- 1: Heizgerät
- 2: Wärmequelle
- 3: Primärwärmetauscher
- 4: Sekundärwärmetauscher
- 5: Hydrauliksystem
- 6: Pumpe
- 7: Ventil
- 8: Warmwasserspeicher
- 9: Warmwasser-Hydrauliksystem
- 10: PCM-Speicher
- 11: Heizkreis
- 12: Vorlauf
- 13: Rücklauf
- 14: Anschluss für den Vorlauf
- 15: Anschluss für den Rücklauf
- 16: Heizkreisventil
- 17: Abgasweg
- 18: Kondensationswärmetauscher
- 19: Bypass Kondensationswärmetauscher
- 20: Solarwärmetauscher
- 21: Bypass PCM-Speicher
- 22: Wärmesenke

## Patentansprüche

1. Heizgerät (1) zum alternierenden oder parallelen Erwärmen von durchlaufendem beziehungsweise in einem Warmwasserspeicher (8) gespeicherten Wasser oder von einem Heizkreis (11) zum Beheizen eines Gebäudes, wobei das Heizgerät (1) einen Brenner (2), einen Primärwärmetauscher (3) zum Übertragen der Wärme vom Brenner (2) auf ein in einem Hydrauliksystem (5) mit einer Pumpe (6) geführten Wärmeträgermedium, Anschlüsse (14, 15) geeignet zur Verbindung mit Vorlauf (12) und Rücklauf (13) eines anschließbaren Heizkreises (11) und einen Sekundärwärmetauscher (4) zum Übertragen der Wärme vom Wärmeträgermedium auf einen an den Sekundärwärmetauscher (4) über ein zweites steuerbares Warmwasser-Hydrauliksystem (9) anschließbaren oder angeschlossenen Warmwasserspeicher (8) umfasst, wobei das Hydrauliksystem (5) zumindest ein Ventil (7) umfasst und so ausgebildet ist, dass in einer ersten Betriebsstellung des Ventils (7) im Betrieb das vom Primärwärmetauscher (3) erwärmte Wärmeträgermedium über die Anschlüsse (14, 15), Vorlauf (12) und Rücklauf (13) durch den anschließbaren Heizkreis (11) geführt werden kann und in einer zweiten Betriebsstellung des Ventils (7) im Betrieb das vom Primärwärmetauscher (3) erwärmte Wärmeträgermedium durch den Sekundärwärmetauscher (4) geführt wird, wobei im Hydrauliksystem (5) stromab des Sekundärwärmetauschers (4) und stromauf des Primärwärmetauschers (3) ein PCM-Speicher (10) angeordnet ist, **dadurch gekennzeichnet, dass** der PCM-Speicher (10) hydraulisch parallel zu dem über die Anschlüsse (14, 15) anschließbaren Heizkreis (11) geschaltet ist, und dass in einer dritten Stellung des Ventils (7) im Betrieb jeweils eine Teilmenge des vom Primärwärmetauscher (3) erwärmten Wärmeträgermediums über die Anschlüsse (14, 15), Vorlauf (12) und Rücklauf (13) durch den anschließbaren Heizkreis (11) und eine Teilmenge durch den Sekundärwärmetauscher (4) führbar ist.

2. Heizgerät (1) nach Anspruch 1, wobei das Heizgerät ein Brennwert-Heizgerät mit einem im Abgasweg (17) des Brenners angeordneten Kondensationswärmetauscher (18) ist und wobei der Kondensationswärmetauscher (18) so mit dem Hydrauliksystem (5) verbunden ist, dass er hydraulisch stromab des Sekundärwärmetauschers (4) und stromauf des PCM-Speichers (10) angeordnet ist.

3. Heizgerät (1) nach einem der vorhergehenden Ansprüche, wobei das Hydrauliksystem einen Bypass (21) für den PCM-Speicher (10) umfasst.

4. Heizgerät (1) nach einem der vorhergehenden Ansprüche, wobei im Hydrauliksystem (5) stromauf des Primärwärmetauschers (3) und gegebenenfalls stromauf des PCM-Speichers (10) ein Solarwärmetauscher (20) zur Übertragung solarer Wärme auf das Wärmeträgermedium vorgesehen ist.

5. Heizgerät (1) nach einem der vorhergehenden Ansprüche, wobei im PCM-Speicher (10) ein Phasenwechselmaterial eingesetzt ist, das einen Schmelzpunkt bei etwa 56 °C aufweist.

6. Verfahren zum Betreiben eines Heizgeräts (1) gemäß Anspruch 1, **dadurch gekennzeichnet, dass** zum Zuführen von Wärme in den PCM-Speicher (10) das Wärmeträgermedium zunächst durch den Primärwärmetauscher (3) und anschließend parallel durch den über die Anschlüsse (14, 15) anschließbaren Heizkreis (11) und durch den PCM-Speicher (10) geführt wird.

## Claims

1. Heating device (1) for the alternating or parallel heating of water flowing through or stored in a hot water storage tank (8) or of a heating circuit (11) for heating a building, wherein the heating device (1) comprises a burner (2), a primary heat exchanger (3) for transferring the heat from the burner (2) to a heat carrier medium conveyed in a hydraulic system (5) with a pump (6), connections (14, 15) suitable for connection to the inflow (12) and return flow (13) of a connectable heating circuit (11), and a secondary heat exchanger (4) for transferring the heat from the heat carrier medium to a hot water storage tank (8) that can be attached or is attached to the secondary heat exchanger (4) via a second controllable hot water hydraulic system (9), wherein the hydraulic system (5) comprises at least one valve (7) and is designed so that in a first operating position of the valve (7) in operation the heat carrier medium heated by the primary heat exchanger (3) can be fed via the connections (14, 15), inflow (12) and return flow (13) through the connectable heating circuit (11) and in a second operating position of the valve (7) in operation the heat carrier medium heated by the primary heat exchanger (3) is passed through the secondary heat exchanger (4), wherein a PCM storage tank (10) is arranged downstream of the secondary heat exchanger (4) and upstream of the primary heat exchanger (3) in the hydraulic system (5), **characterised in that** the PCM storage tank (10) is connected hydraulically in parallel to the heating circuit (11) connectable via the connections (14, 15), and **in that** in a third position of the valve (7) in operation in each case a partial amount of the heat carrier medium heated by the primary heat exchanger (3) can be fed via the connections (14, 15), inflow (12) and return line (13) through the connectable heating circuit (11) and a partial amount can be fed through the secondary heat exchanger (4).

2. Heating device (1) according to claim 1, wherein the heating device is a gas-fired condensing boiler with a condensation heat exchanger (18) arranged in the flue system (17) of the burner and wherein the condensation heat exchanger (18) is connected to the hydraulic system (5) so that it is hydraulically arranged downstream of the secondary heat exchanger (4) and upstream of the PCM storage tank (10).

3. Heating device (1) according to any one of the preceding claims, wherein the hydraulic system includes a bypass (21) for the PCM storage tank (10).

4. Heating device (1) according to any one of the preceding claims, wherein a solar heat exchanger (20) for transferring solar heat to the heat carrier medium is provided in the hydraulic system (5) upstream of the primary heat exchanger (3) and optionally upstream of the PCM storage tank (10).

5. Heating device (1) according to any one of the preceding claims, where a phase exchange material that has a melting point of about 56°C is used in the PCM storage tank (10).

6. Method for operating a heating device (1) according to claim 1, **characterised in that** in order to supply heat to the PCM storage tank (10) the heat carrier medium is first of all passed through the primary heat exchanger (3) and then in parallel through the heating circuit (11) connectable via the connections (14, 15) and through the PCM storage tank (10).

## Revendications

1. Appareil de chauffage (1) pour le chauffage alterné ou parallèle d'une eau circulant ou stockée dans un réservoir d'eau chaude (8) ou d'un circuit de chauffage (11) destiné à chauffer un bâtiment,
dans lequel l'appareil de chauffage (1) comprend un brûleur (2), un échangeur de chaleur primaire (3) destiné au transfert de la chaleur du brûleur (2) à un fluide caloporteur guidé dans un système hydraulique (5) avec une pompe (6), des raccords (14, 15) destinés à relier l'aller (12) et le retour (13) d'un circuit de chauffage (11) pouvant être raccordé et un échangeur de chaleur secondaire (4) destiné au transfert de la chaleur du fluide caloporteur à un réservoir d'eau chaude (8) raccordé ou pouvant être raccordé à l'échangeur de chaleur secondaire (4) par l'intermédiaire d'un deuxième système hydraulique d'eau chaude (9) commandable,
dans lequel le système hydraulique (5) comprend au moins une vanne (7) et est conçu de telle sorte que, dans une première position de fonctionnement de la vanne (7), lors du fonctionnement, le fluide caloporteur chauffé par l'échangeur de chaleur primaire (3) peut être guidé par l'intermédiaire des raccords (14, 15), de l'aller (12) et du retour (13) à travers le circuit de chauffage (11) pouvant être raccordé et, dans une deuxième position de fonctionnement de la vanne (7), lors du fonctionnement, le fluide caloporteur chauffé par l'échangeur de chaleur primaire (3) est guidé à travers l'échangeur de chaleur secondaire (4), un réservoir à matériau à changement de phase MCP (10) étant agencé dans le système hydraulique (5) en aval de l'échangeur de chaleur secondaire (4) et en amont de l'échangeur de chaleur primaire (3),
**caractérisé en ce que** le réservoir MCP (10) est branché de façon hydraulique en parallèle avec le circuit de chauffage (11) pouvant être raccordé par l'intermédiaire des raccords (14, 15) et **en ce que**, dans une troisième position de la vanne (7), lors du fonctionnement, à chaque fois une quantité partielle du fluide caloporteur chauffé par l'échangeur de chaleur primaire (3) peut être guidée par l'intermédiaire des raccords (14, 15), de l'aller (12) et du retour (13) à travers le circuit de chauffage (11) pouvant être raccordé et une quantité partielle peut être guidée à travers l'échangeur de chaleur secondaire (4).

2. Appareil de chauffage (1) selon la revendication 1, dans lequel l'appareil de chauffage est un appareil de chauffage à puissance calorifique avec un échangeur de chaleur à condensation (18) agencé dans le trajet de gaz d'échappement (17) du brûleur et dans lequel l'échangeur de chaleur à condensation (18) est relié de telle sorte au système hydraulique (5) qu'il est agencé de façon hydraulique en aval de l'échangeur de chaleur secondaire (4) et en amont du réservoir MCP (10).

3. Appareil de chauffage (1) selon l'une des revendications précédentes, dans lequel le système hydraulique comprend une dérivation (21) pour le réservoir MCP (10).

4. Appareil de chauffage (1) selon l'une des revendications précédentes, dans lequel il est prévu dans le système hydraulique (5) en amont de l'échangeur de chaleur primaire (3) et éventuellement en amont du réservoir MCP (10) un échangeur de chaleur solaire (20) destiné au transfert de la chaleur solaire au fluide caloporteur.

5. Appareil de chauffage (1) selon l'une des revendications précédentes, dans lequel on utilise dans le réservoir MCP (10) un matériau à changement de phase qui présente un point de fusion à 56 °C environ.

6. Procédé de fonctionnement d'un appareil de chauffage (1) selon la revendication 1, **caractérisé en ce que,** pour amener de la chaleur dans le réservoir MCP (10), le fluide caloporteur est d'abord guidé à travers l'échangeur de chaleur primaire (3) et ensuite en parallèle à travers le circuit de chauffage (11) pouvant être raccordé par l'intermédiaire des raccords (14, 15) et à travers le réservoir MCP (10).
